(19) **Europäisches Patentamt**
**European Patent Office**
**Office européen des brevets**

(11) **EP 1 674 894 B1**

(12) **EUROPEAN PATENT SPECIFICATION**

(45) Date of publication and mention
of the grant of the patent:
**19.08.2009 Bulletin 2009/34**

(51) Int Cl.:
*G02B 5/08* (2006.01)        *B32B 27/36* (2006.01)
*B32B 27/20* (2006.01)

(21) Application number: **04792291.9**

(86) International application number:
**PCT/JP2004/015047**

(22) Date of filing: **13.10.2004**

(87) International publication number:
**WO 2005/045482 (19.05.2005 Gazette 2005/20)**

(54) **REFLECTING FILM**

REFLEKTIERENDER FILM

FILM REFLECHISSANT

(84) Designated Contracting States:
**DE FR GB**

(30) Priority: **17.10.2003 JP 2003357480**

(43) Date of publication of application:
**28.06.2006 Bulletin 2006/26**

(73) Proprietor: **MITSUBISHI PLASTICS, INC.**
**Tokyo 100-0005 (JP)**

(72) Inventor: **WATANABE, Takayuki,**
**c/o MITSUBISHI PLASTICS, INC.**
**Nagahama-shi, Shiga 5268660 (JP)**

(74) Representative: **Albrecht, Thomas**
**Kraus & Weisert**
**Patent- und Rechtsanwälte**
**Thomas-Wimmer-Ring 15**
**80539 München (DE)**

(56) References cited:
**EP-A- 0 724 181          EP-A- 1 466 944**
**EP-A- 1 627 894          WO-A1-95/18772**
**WO-A1-03/055947          JP-A- 10 000 731**
**JP-A- 10 148 705          JP-A- 2001 033 605**
**JP-A- 2001 348 526          JP-A- 2002 050 222**
**JP-A- 2002 148 415          JP-A- 2002 148 415**
**JP-A- 2003 195 020          JP-A- 2004 101 601**

**Description**

CROSS REFERENCE TO RELATED APPLICATION

This application is the U.S. national stage of International Application No. PCT/JP2004/015047, filed October 13, 2004, which was published under PCT Article 21(2) as Publication No.WO2005/045482 and of which the instant application claims the benefit, which in turn claims the benefit of Japan Patent Application No.2003-357480, filed October 17,2003.

TECHNICAL FIELD

The present invention relates to a reflecting film. More particularly, the present invention relates to a reflecting film for use in a reflecting plate of a liquid crystal display or the like.

BACKGROUND ART

Recently, reflecting films are used in the fields of a reflecting plate in a liquid crystal display, a member for a projection screen or a planar light source, a reflecting plate for illumination and so on. For example, in reflecting plates of liquid crystal displays, a larger screen of a liquid crystal device and higher displaying performance require reflecting films with high reflectivity to improve the performance of the backlight unit by supplying as much light as possible to liquid crystals.
Examples of the known reflecting film include white sheets formed from polyester such as polyethylene terephthalate (hereinafter, sometimes referred to as "PET" for short) and titanium oxide (cf. Patent Document 1: Japanese Patent Examined Publication H8-16175). However,the conventional white sheets have problems in that they do not have required high light reflectivity nor provide sufficient brightness of a screen. There is another reflecting film which is obtained by forming a sheet from a polypropylene and titanium oxide and then drawing to form voids therein (cf. Patent Document 2: Japanese Patent Application Laid-open H11-174213). The sheet provides high light reflectivity by not only light reflection due to titanium oxide but also light scattering by the voids. However, the light absorption of titanium oxide of sheets decreases reflectivity in a wavelength region of 420 nm or less, thus causing a problem that the screen with the sheet provides insufficient brightness. EP-A2-0 724 181 discloses a reflecting film comprising a thermoplastic resin having voids and which contains titanium oxide, covered by a thermoplastic polyester resin.

DISCLOSURE OF THE INVENTION

Problems to be solved by the Invention

The present invention has been achieved to solve the above-mentioned problems. It is an object of the present invention to provide a reflecting film that has an excellent light reflectivity over a wide wavelength region including a wavelength region of 400 nm to 420 nm.

Means for Solving the Problems

The reflecting film of the present invention according to claim 1 includes a layer B that contains rutile type titanium oxide and a layer A that contains fine powder filler other than rutile type titanium oxide. The layer A is positioned outermost on the side of a surface used for reflection. Each of the layers A and B has voids formed by drawing and is independently formed from a resin composition containing a thermoplastic resin. The thermoplastic resin is an aliphatic polyester.
Here, the reflecting film may have a two-layer construction including the layer A and the layer B, or a three-layer construction including the layer A, the layer B, and the layer A in this order.
Further, the aliphatic polyester is preferably a polylactic acid based resin.
The reflecting plate for a liquid crystal displaying device according to the present invention according to claim 1 comprises either one of the above-mentioned reflecting films.

EFFECTS OF THE INVENTION

The present invention according to claim 1 can provide a reflecting plate having a good reflectivity over a wide wavelength region, which can be used as a reflecting plate of a liquid crystal display and the like.

MODE FOR CARRYING OUT THE INVENTION

Hereinafter, the present invention will be explained in more detail.
The reflecting film of the present invention according to claim 1 has a layer B that contains rutile type titanium oxide and a layer A that contains fine powder filler other than rutile type titanium oxide. The layer A is placed on the outermost side where light enters.

Preferably, the layer A is formed from a resin composition that contains fine powder filler and a thermoplastic resin as main components. In this case, the fine powder filler contained in the layer A does not include rutile type titanium oxide. Examples of the fine powder filler contained in the layer A include inorganic fine powder and organic fine powder that do not absorb light in a wavelength region of 400 nm to 700 nm.

Examples of the inorganic fine powder that can be used include calcium carbonate, magnesium carbonate, barium carbonate, magnesium sulfate, barium sulfate, calcium sulfate, zinc oxide, magnesium oxide, calcium oxide, anatase type titanium oxide, alumina, aluminum hydroxide, hydroxyapatite, silica, mica, talc, kaolin, clay, glass powder, asbestos powder, zeolite, and acid clay. Examples of the organic fine powder that can be used include polymer beads and hollow polymer beads. In the present invention, at least one fine powder selected from these can be used. The inorganic fine powder and the organic fine powder can be used in combination. Taking into consideration the light reflecting properties of the obtained film, it is preferable to use a fine powder filler having a large difference in refractive index from the base resin that constitutes the film. It is preferable to use calcium carbonate, barium sulfate, or zinc oxide having a refractive index of, for example, 1.6 or more. It is more preferable to use anatase type titanium oxide having a refractive index of 2.5 or more. Fine powder filler with a higher refractive index can provide a larger difference in refractive index from the resin that constitute the film, enabling the film to have light reflectivity easily due to refraction and scattering action at the interface between the resin and the fine powder filler. Taking into consideration long-term durability of the obtained film, it is preferable to use fine powder filler that is stable to acids or alkalis. It is particularly preferable to use, for example, barium sulfate. This is because deterioration of the thermoplastic resin that constitutes the film can be prevented therewith. Further, it is necessary to use fine powder filler that does not absorb light in a wavelength region of 400 nm to 700 nm on the outermost layer where light enters. Accordingly, no rutile type titanium oxide can be added to such an outermost layer.

In the present invention, the layer B contains rutile type titanium oxide. It is particularly preferable to use among titanium oxides, a high purity titanium oxide having a high purity. The high purity titanium oxide in the present invention means titanium oxide that has low light absorbing performance with respect to visible light and a low content of coloring elements such as vanadium, iron, niobium, copper, and manganese. In the present invention, titanium oxide having a vanadium content of 5 ppm or less is called "high purity titanium oxide". The high purity titanium oxide preferably has reduced amounts of coloring elements such as iron, niobium, copper, and manganese from the viewpoint of making the light absorbing performance lower.

The titanium oxide having a vanadium content of 5 ppm or less includes, for example, one produced by a chlorine process. In the chlorine process, first, rutile ore that is composed mainly of titanium oxide is reacted with chlorine gas in a high temperature oven at about 1,000°C to generate titanium tetrachloride. Then, burning the titanium tetrachloride with oxygen makes high purity titanium oxide. Methods of producing titanium oxide in an industrial scale also include a sulfuric acid process. However, the titanium oxide obtained by this process contains a relatively large amount of coloring elements such as vanadium, iron, copper, manganese, and niobium, so that the titanium oxide has a higher light absorbing performance for visible light. Accordingly, it is difficult to obtain high purity titanium oxide by the sulfuric acid method.

Using titanium oxide as the fine powder filler can achieve high light reflectivity even when the porosity in the inside of the film is low. Thus, sufficiently high light reflectivity can be achieved even with a porosity of, for example, 15% or less. This is presumably due to the high refractive index and high hiding power of titanium oxide. In addition, if the amount of the filler is decreased, the number of voids formed by drawing is also decreased. Therefore, use of titanium oxide decreases the number of voids inside the film, so that the mechanical properties of the film can be increased while maintaining the high reflectivity thereof. Even when a large amount of the filler is used, by drawing the film in a less drawing rate to decrease the number of voids, the mechanical properties of the film can be improved as effectively as when the amount of the used filler is decreased. It is also advantageous in increasing the dimension stability of the film to decrease the number of voids inside the film in this manner. If high reflection performance is secured in spite of a small thickness of a film, the film can be used as a reflecting film for a small, thin-type liquid crystal display used in a notebook type computer, a portable phone and so on.

To improve the dispersibility of the fine powder filler in the resin, those fine powder fillers of which surface is treated with a fatty acid, a fatty acid ester, or the like may be used.
The fine powder filler used in the present invention preferably has an averege particle diameter from 0.05 $\mu$m to 15 $\mu$m, more preferably from 0.1 $\mu$m to 10 $\mu$m. When the average particle diameter of the fine powder f iller is 0.05 $\mu$m or more, the dispersibility of the fine powder filler in the resin is not decreased, so that a uniform film can be obtained therefrom.

On the other hand, when the average particle diameter of the fine powder filler is 15 $\mu$m or less, the formed voids are not coarse, so that films having a high reflectance can be obtained.

Preferably, the fine powder filler is blended in the resin in a dispersed manner. The content of the fine powder filler in the reflecting film of the present invention, regarding the light reflecting performance, productivity of the film, and mechanical properties and so on, is less than 60 mass%, more preferably 10 mass% or more and less than 55 mass%, and particularly preferably 20 mass% or more and less than 50 mass% based on the total mass of the resin composition. This is because when the content of the fine powder filler is 60 mass% or more, sufficient film strength cannot be secured and film may be torn during the drawing of the film.

The layer A is formed from a resin composition containing a resin and the above-mentioned fine powder filler as main components. Here, the resin from which the layer A is formed is preferably one that can be molded into a film, a sheet or the like. For example, a thermoplastic resin is preferably used. Further, the resin that constitutes the layer A preferably has good drawability. Taking this into consideration, preferable examples of the resin include aromatic polyesters, aliphatic polyesters and so on.

In the present invention, "sheet" refers to a thin, flat product having a smaller thickness compared with its length and its width as in the definition of Japanese Industrial Standards (JIS). On the other hand, "film" refers to a thin and flat product having an extremely smaller thickness compared with its length and its width, and its maximum thickness is defined. The film is usually supplied in the form of a roll (Japan Industrial Standards IIS K-6900). Accordingly, sheets having particularly small thicknesses may be termed as films, but there is no clear-cut boundary between "sheet" and "film". Therefore, in the present application, "sheet" may be used including "film".

In the case of the reflecting film that contains fine powder filler in the film, the light reflecting properties are provided using inflection and scattering of light at interfaces in the film. Further considering the light reflectivity of the film, it is preferred to use aliphatic polyesters having a relatively small refractive index rather than aromatic polyesters containing an aromatic ring and having a refractive index of about 1.55 or more as the resin that constitutes the layer A. Among the aliphatic polyesters, polylactic acid based resins having the smallest refractive indices are preferable. The smaller the refractive index of such a resin is, the greater the difference is in refractive index between the resin that constitutes the film and the fine powder filler, providing film with high light reflecting properties easily. Aliphatic polyester including polylactic acid based resins contain no aromatic rings in the molecular chain thereof and hence do not absorb ultraviolet rays. Therefore, the reflecting films made therefrom do not yellow or deteriorate, thus causing no decrease in reflectance of the film.

On the other hand, the aliphatic polyester that can be used include those chemically synthesized, those obtained by fermentation by microorganisms and mixtures of these. Examples of the chemically synthesized aliphatic polyester include poly($\varepsilon$-caprolactam) obtained by ring-opening polymerization of lactone; polyethylene adipate, polyethylene azelate, polytetramethylene succinate, and cyclohexanedicarboxylic acid/cyclohexanedimethanol condensation products obtained by polymerization of a dibasic acid and a diol; polylactic acid base resins obtained by polymerizing hydroxycarboxylic acid; polyglycols; and aliphatic polyesters obtained by replacing a portion, for example, 50% or less of ester bonds in the above-mentioned aliphatic polyesters with one or more of, for example, an amido bond, an ether bond, and a urethane bond. Further, the aliphatic polyester synthesized by fermentation by microorganisms include polyhydroxybutyrate, copolymers of hydroxybutyrate, hydroxyvalerate and so on.

Herein, the term "polylactic acid based resin(s)" means homopolymers of D-lactic acid or L-lactic acid, or copolymers of these. Specifically, the polylactic acid based resins include poly(D-lactic acid) whose structural unit is D-lactic acid, poly(L-lactic acid) whose structural unit is L-lactic acid, and further, poly(DL-lactic acid) that is copolymers of L-lactic acid and D-lactic acid, and mixtures of these.

The poly lactic acid based resins can be produced by known methods, such a condensation polymerization method and a ring-opening polymerization method. For example, according to the condensation polymerization method, D-lactic acid, L-lactic acid, or mixtures of these are directly subjected to condensation polymerization with dehydration to obtain polylactic acid based resins having a desired composition. Further, in the case of ring opening polymerization method, polylactic acid based resin having any desired composition can be obtained from a lactide, which is a cyclic dimer of lactic acid, in the presence of a predetermined catalyst and using a modifier as necessary. The lactides include L-lactide, which is a dimer of L-lactic acid; D-lactide, which is a dimer of D-lactic acid; and DL-lactide, which consists of L-lactic acid and D-lactic acid. These can be mixed as necessary and polymerized to obtain polylactic acid based resins having any desired composition and crystallinity.

In the polylactic acid based resins used in the present invention, preferable compositional ratio of D-lactic acid to L-lactic acid is 100:0 to 85:15, or 0:100 to 15:85, more preferably 99.5:0.5 to 95:5, or 0.5:99.5 to 5:95. The polylactic acid based resins having a compositional ratio of D-lactic acid to L-lactic acid of 100:0 or 0:100 tend to have very high crystallinity, high melting point, and excellent heat resistance and excellent mechanical properties. That is, such polylactic acid based resins are preferable since upon their drawing or heat treatment, the resins crystallize to improve the heat resistance and mechanical properties. On the other hand, the polylactic acid based resins made of D-lactic acid and L-lactic acid are preferable since they are imparted therewith flexibility and films obtained therefrom have improved molding stability and drawing stability. Therefore, taking into consideration the balance between the heat resistance of and the molding stability and drawing stability of the obtained reflecting film, in the polylactic acid based resins used in the present invention the more preferable compositional ratio of D-lactic acid to L-lactic acid is 99.5: 0. 5 to 95:5, or 0.5:99.5 to 5:95.

In the present invention according to claim 1, polylactic acid based resins with different copolymerization ratios of D-lactic acid to L-lactic acid may be blended. In this case, adjustment of the compositional ratios of the polylactic acid based resins such that an average value of the compositional ratios of a plurality of lactic acid based resins falls within the above-mentioned ranges of the compositional ratio can provide the above-mentioned balanced properties. Blending homopolymers of D-lactic acid and L-lactic acid and copolymers thereof enables to balance bleed stability and development of heat resistance.

The polylactic acid based resins used in the present invention have, for example, weight average molecular weights of preferably 60,000 to 400,000, more preferably 100,000 to 300,000. When the polylactic acid based resin has a weight average molecular weight of 50,000 or less, the obtained film may sometimes have poor mechanical properties.

The layer B that constitutes the reflecting film of the present invention according to claim 1 is formed from a resin composition that contains rutile type titanium oxide and a resin as main components. Rutile type titanium oxide used as fine powder f iller preferably has an average particle diameter of 0.05 $\mu$m or more and 1 $\mu$m or less, more preferably 0.1 $\mu$m or more and 0.5 $\mu$m or less. When the particle diameter of the fine powder filler is 0.05 $\mu$m or more, the dispersibility of the fine powder filler in the resin is not decreased, so that a uniform film can be obtained therefrom. On the other hand, when the average particle diameter of the fine powder filler is 1 $\mu$m or less, the voids formed are not coarse, so that films having a high reflectance can be obtained.

Preferably, the rutile type titanium oxide is blended in the resin in a dispersed manner. The content of the rutile type titanium oxide in the layer B, taking into consideration, the light reflecting performance, productivity, and mechanical properties of the film, is less than 60 mass%, preferably 10 mass% or more and less than 55 mass%, more preferably 20 mass% or more and less than 50 mass% based on the total mass of the resin composition used for forming the layer B. When the content of the rutile type titanium oxide is 60 mass% or more, sufficient film strength cannot be secured, hence the film may be torn when it is drawn.

As described above, the layer B is formed from the resin composition that contains a resin and rutil type titanium oxide as main components. Here, the resin from which the layer B is formed is preferably one that can be molded into a film, a sheet or the like. For example, the resin used for forming the layer A can be used. For example, thermoplastic resins are preferably used. The thermoplastic resins include aromatic polyester and aliphatic polyesters. Among them, aliphatic polyesters are used more preferably and polylactic acid based resins are used particularly preferably.

The reflecting film of the present invention according to claim 1 has the above-mentioned layer A at least on one of the outermost layers. For example, a two-layer construction consisting of layer A/layer B, a three-layer construction consisting of layer A/layer B/layer A, and so on can be exemplified. One or more other layers may be provided between the layer A and the layer B, or the respective layers A and B may be constituted by a plurality of unit layers.

The layer A positioned at the outermost on the side of the reflecting film of the present invention where light enters has voids therein. Also, the layer B has voids. The ratio of voids that occupy the film (porosity) is preferably 5% to 50%, more preferably 10% to 50% for both of the layers A and B. Reflecting films having a porosity of 5% or more and 50% or less can realize high light reflecting performance since whitening of the film can proceed sufficiently. In addition, the mechanical strength of the film prevents breakage of the film in the process of producing the film.

To form voids in a film, for example, a method of drawing the film at least monoaxially. This makes the best of different behaviors of, the resin and the fine powder filler upon drawing. That is, when the film is drawn at a drawing temperature suitable for the resin, the resin that constitutes the matrix is drawn while the fine powder filler tends to remain in the original state, thus causing peeling of the resin and the fine powder filler at their interface to form voids. Depending on the drawing conditions, it may be difficult to provide the film with the function of a reflecting film or with sufficient heat resistance. Therefore, drawing conditions are important.

To realize a film having a porosity of 5% or more therein, it is preferable to draw the obtained sheet at an area magnification of 5 times or more, more preferably 7 times or more. Preferably, the drawing is performed biaxially. Although it may be in some cases difficult to realize an area magnification of 5 times or more only by monoaxial drawing, biaxial drawing readily results in an area magnification of 5 times or more. That is, by biaxially drawing, a film having a higher porosity can be obtained in a stable manner and as a result, the reflectance of the film can be increased.

Further, monoaxial drawing makes voids in the form of fibers extended in one direction, while biaxial drawing makes the voids to extend in both lengthwise and breadthwise to become disk-shaped. In other words, biaxial drawing increases peeling area at the interface of the aliphatic polyester resin and the fine powder filler to promote the whitening of the film, enabling to have good reflectance as a reflecting film.

Biaxial drawing of a film can increase the mechanical strength of the film and hence it is preferable that the film be drawn biaxially from the viewpoint of the mechanical strength of the film. In the case that the reflecting film is required to have heat resistance, the film preferably has no heterogeneity in the direction in which the film is shrunk. Hence it is not desirable to use the monoaxial drawing alone.

The drawing temperature at which a cast sheet is drawn is preferably the glass transition temperature of resin (Tg) or higher and a temperature of (Tg+70°C) or lower. When the drawing temperature is the glass transition temperature (Tg) or higher, the film is stably drawn without being torn. When the drawing temperature is the temperature of (Tg+70°C) or lower, drawing orientation becomes higher, and the porosity increases. Thus, a film having high reflectance can be obtained with ease.

The order of drawing in biaxial drawing is not particularly limited. For example, either simultaneous biaxial drawing or sequential biaxial drawing may be used. After melting film formation using a drawing installation, either drawing of the film in an MD(Machine Direction) by roll drawing and subsequent drawing in a TD(Transvers Direction) by tenter drawing, or biaxial drawing by tubular drawing may be performed.

In the present invention according to claim 1, surface treatment by corona discharge or the like can be performed after the film is drawn. Alternatively, to impart the reflecting film with heat resistance and dimension stability, it is preferable to perform heat fixation after the drawing. The treating temperature for the heat fixation of a film is preferably from {melting point of resin (Tm)-100}°C to Tm°C, more preferably from (Tm-80)°C to (Tm-20)°C. The treating time required for the heat fixation is preferably 1 second to 5 minutes. Installation and the like for drawing are not particularly limited. However, it is preferable to perform tenter drawing, which allows heat fixation treatment after the drawing.

In the present invention according to claim 1, the resin composition may further contain antioxidants, light stabilizers, heat stabilizers, hydrolysis-preventing agents, lubricants, dispersants, ultraviolet absorbents, white pigments, fluorescent brighteners, and other additives so far as they do not damage the effects of the present invention.

Preferably, the reflecting film of the present invention according to claim 1 has an average surface reflectance of 90% or more, more preferably 95% or more at a wavelength respectively in the range of 400nm to 420nm and in the range of 420 nm to 700 nm. When the average reflectance of the film surface is 90% or more, the film has good reflecting properties and the screen of a liquid crystal display with the film can realize sufficient brightness. The reflecting film thus obtained has a sufficient predetermined reflectance to serve as an acceptable reflecting film. By constructing a reflecting film having the outermost layer (layer A) where light enters that contains a fine powder filler other than rutile type titanium oxide and a layer B that contains rutile type titanium oxide, the decrease in reflectance in a wavelength region of 400 nm to 420 nm can be prevented and sufficient reflectance in a wavelength region of 420 nm to 700 nm can be assured.

By using the aliphatic polyester as the resin that constitutes the reflecting film, the obtained reflecting film does not yellow when exposed to ultraviolet rays and can maintain excellent average reflectance even after its exposure to ultraviolet rays.

When a biodegradable resin is used as the resin that constitutes the reflecting film, the formed film can be degraded by microorganisms in a landfill without causing waste problems. For example, when aliphatic polyester resins are subjected to earth filling, the ester bonds in the resin are hydrolyzed to reduce the molecular weight of the resin to about 1,000, and the resultant is subsequently biodegraded by microorganisms in the soil. As a result, the life of landfill sites will not be shortened, and natural landscape or environment of wild animals and plants will not be damaged.

Hereinafter, the method of producing the reflecting film of the present invention according to claim 1 will be described by way of examples. However, the present invention should not be construed as being limited thereto. First, the resin that constitutes the layer A is blended with fine powder filler, and the resin that constitutes the layer B is blended with rutile type titanium oxide. Each of the layers is further blended with additives such as a hydrolysis-preventing agent and other additives as necessary to prepare a resin composition. Specifically, fine powder filler and so on are added to the resin as necessary and the resultant is mixed in a ribbon blender, a tumbler, a Henschel mixer or the like and then kneaded using a Banbury mixer, a single-screw, a twin-screw extruder or the like at a temperature equal to or higher than the melting temperature of the resin to produce resin compositions for each layer. Alternatively, the resin composition can also be obtained by preparing in advance a master batch obtained by blending a portion of the resin with the fine powder filler in high concentrations, and mixing the master batch with another portion of the resin to desired concentrations of the components.

Then, the thus-obtained resin composition for each layer is melted and formed into a film. The method for forming the resin composition into a film that can be preferably used includes generally an inflation molding method or an extrusion molding method using a T-die. For example, the resin compositions for the respective layers may be extruded through a double-layer mouth ring of the T-die such that a two-layer lamination of layer A/layer B can be obtained. Alternatively, the resin compositions for the respective layers may be extruded through a triple-layer mouth ring of the T-die such that the resin composition for the layer A constitutes both surface layers, that is, a three-layer lamination of layer A/layer B/layer A can be obtained. Specifically, the resin composition for each layer is dried and then supplied to an extruder, heated to a temperature equal to or higher than the melting temperature of the resin. Alternatively, the resin composition can be supplied to the extruder without drying. When the resin composition is not dried, it is preferable that a vacuum vent be used when the resin composition is melt-extruded. The conditions of extrusion such as extrusion temperature must be set considering factors, for example, a reduction in molecular weight of the resin due to decomposition. For example, the extrusion temperature is preferably in the range of 170°C to 300°C. Thereafter, the molten resin composition for each layer is extruded from a slit-shaped discharge nozzle of a T-die and contacted with a cooling roll to solidify the composition to form a cast sheet.

Preferably, the reflecting film of the present invention according to claim 1 is drawn at least monoaxially, more preferably biaxially. The drawing can be performed by a roll, a tenter, air inflation, a tubular, a mandrel or the like. For example, after the film is drawn in an MD by roll drawing, it may be subsequently drawn either in a TD by tenter drawing, or biaxially by tubular drawing. Then, heat fixation is performed as necessary to obtain a reflecting film.

The thickness of the reflecting film of the present invention according to claim 1, which is not particularly limited, is usually about 30 $\mu$m to about 500 $\mu$m and preferably about 50 $\mu$m to about 500$\mu$ m for practical handling. The thickness of the layer A that is arranged as the outermost layer on the side where light enters is usually in the range of 10 $\mu$m to 70 $\mu$m, preferably 20 $\mu$m to 70 $\mu$m. If the thickness of the layer A is 10 $\mu$m or more, a film having high reflecting performance of light in a wavelength region of 400 nm to 420 nm can be obtained. On the other hand, if the thickness of the layer A is 70 $\mu$m or less, the film can maintain high reflecting performance of light in a wavelength region of 420 nm to 700 nm. Preferably, the thickness of the layer B is 20 $\mu$m or more.

EXAMPLES

Hereinafter, the present invention according to claim 1 is explained in more detail by examples. However, the present invention should not be considered to be limited thereto. Instead, various applications or modifications may be made without departing the technical concept of the present invention. Measurements and evaluations shown in the examples were performed as explained below. Here, the direction in which the film is taken up (direction of flow of film) is indicated by MD and the direction perpendicular thereto is indicated by TD.

(Measurement and evaluation methods)

(1) Average particle diameter

By using a powder specific surface area measuring apparatus (permeation method), model "SS-100" manufactured by Shimadzu Corporation with a sample tube of 2 cm$^2$ in cross section and 1 cm in height, the time in which 20 cc of air was permeated through a 3-g sample packed in the sample tube at 500 mm $H_2O$ was repeatedly measured, and an average particle diameter of the sample was calculated from the measured values.

(2) Difference between refractive index of resin and refractive index of fine powder filler

The refractive index (n1) of a resin was measured according to the method A of JIS-K-7142 and the refractive index (n2) of a fine powder filler or rutile type titanium oxide was measured according to the method B of JIS-K-7142. From the measured values, a difference between the refractive index of the resin and the refractive index of the fine powder filler or rutile type titanium oxide was calculated. However, the refractive index of calcium carbonate as the filler component was obtained according to the method B of JIS-K-7142.

(3) Porosity (%)

The density of a film before drawing (indicated as "non-drawn film density") and the density of the film after drawing (indicated as "drawn film density") were measured and the measured values were assigned in the following equation to obtain the porosity of the film.

$$\textbf{Porosity (\%) = \{(Non-drawn film density - Drawn film density)/Non-drawn film density\} × 100}$$

(4) Average reflectance (%)

By using a spectrophotometer ("U-4000", manufactured by Hitachi, Ltd.) with an integrating sphere, in comparison with the reflectance of an alumina white plate as 100%, reflectance of a sample film was measured at intervals of 2 nm over a wavelength range of 400 nm to 700 nm. An average value of the measured values in a wavelength region of 400 nm to 420 nm and an average value of the measured values in a wavelength region of 420 nm to 700 nm were calculated. These values were each defined as an average reflectance in each wavelength region. However, for films of a laminated structure, the reflectance of each film when light was irradiated from the side of the layer A was measured and an average reflectance was calculated from the measured values.

The polylactic acid based resins used in the examples were prepared as follows.

[Preparation of Polylactic acid based resin (PLA) (1): L-form content 99.5%]

100 kg of L-lactide (trade name: PURASORB L) manufactured by Purac Japan Co., Ltd. adding 15-ppm tin octylate was charged in a 500-liter batch-type polymerization tank equipped with an agitator and a heater. Then, the polymerization tank was urged with nitrogen and polymerization was performed under conditions of a temperature of 185°C and an agitation speed of 100 rpm for 60 minutes to obtain a melt. The obtained melt was supplied to a 40-mm$\phi$ equidirectional twin-screw extruder equipped with three stages of a vacuum vent, manufactured by Mitsubishi Heavy Industries, Ltd., and extruded into strands at 200°C while evaporating volatile components at a vent pressure of 4 Torr to obtain pellets of a polylactic acid based resin.
The obtained polylactic acid based resin had a weight average molecular weight of 200,000, an L-form content of 99.5%, and a D-form content of 0.5%. The polylactic acid based resin had a glass transition temperature (Tg) of 65°C.

[Example 1]

(Preparation of resin composition for layer A)

Pellets of polylactic acid based resin (1) having a weight average molecular weight of 200,000 (D-form content of 0.5%, glass transition temperature of 65°C) and anatase type titanium oxide having an average particle diameter of 0.16 $\mu$m were mixed in a ratio of 50 mass%/50 mass% to form a mixture. 4.5 mass parts of a hydrolysis-preventing agent (bis(dipropylphenyl)carbodiimide) was added to 100 mass parts of the mixture and mixed. Then, the resultant mixture was formed into pellets by using a twin-screw extruder to prepare a so-called master batch. The master batch and polylactic acid based resin (1) were mixed in a ratio such that master batch:polylactic acid based resin (1) = 40 mass parts:60 mass parts to prepare a resin composition. Thereafter, the resin composition was supplied to an extruder A heated at 220°C.

(Preparation of resin composition for layer B)

Pellets of polylactic acid based resin (1) having a weight average molecular weight of 200,000 (D-form content of 0.5%, glass transition temperature of 65°C) and rutile type titanium oxide (vanadium content of 5 ppm or less; produced by a chlorine process) having an average particle diameter of 0.25 $\mu$m were mixed in a ratio of 50 mass%/50 mass% to form a mixture. 4.5 mass parts of a hydrolysis-preventing agent (bis(dipropylphenyl)carbodiimide) was added to 100 mass parts of the mixture and mixed. Then, the resultant mixture was formed into pellets by using a twin-screw extruder to prepare a so-called master batch. The master batch and polylactic acid based resin (1) were mixed in a ratio such that master batch:polylactic acid based resin (1) = 40 mass parts:60 mass parts to prepare a resin composition. Thereafter, the resin composition was supplied to an extruder B heated at 220°C.

(Preparation of films)

The resin composition for layer A in a molten state and the resin composition for layer B in a molten state were extruded from the extruders A and B with T-dies, respectively, into sheets constituting a two-layer construction consisting of layer A/layer B, which was cooled to solidify to obtain a film. The obtained film was drawn at 65°C biaxially in a draw ratio of 3 times in the MD and 3 times in the TD as shown in Table 1. Thereafter, the film was heat-treated at 140°C to obtain a reflecting film having a thickness of 188 $\mu$m (layer A/layer B=48 $\mu$m/140 $\mu$m).
The obtained reflecting film was measured and evaluated for porosity and average reflectance. The results obtained are shown in Table 1.

[Example 2]

A reflecting film having a thickness of 188 $\mu$m was prepared in the same manner as in Example 1 except that zinc oxide having an average particle diameter of 0.4 $\mu$m in place of anatase type titanium oxide was mixed.
The obtained reflecting film was measured and evaluated in the same manner as in Example 1. The results obtained are shown in Table 1.

[Example 3]

A reflecting film having a thickness of 188 μm was prepared in the same manner as in Example 1 except that calcium carbonate having an average particle diameter of 0.15 μm in place of anatase type titanium oxide was mixed. The obtained reflecting film was measured and evaluated in the same manner as in Example 1. The results obtained are shown in Table 1.

[Example 4]

A reflecting film having a thickness of 188 μm was prepared in the same manner as in Example 1 except that barium sulfate having an average particle diameter of 0. 7 μm in place of anatase type titanium oxide was mixed. The obtained reflecting film was measured and evaluated in the same manner as in Example 1. The results obtained are shown in Table 1.

[Comparative Example 1]

Pellets of polylactic acid based resin (1) having a weight average molecular weight of 200,000 (D-form content of 0.5%, glass transition temperature of 65°C) and rutile type titanium oxide having an average particle diameter of 0.25 μm were mixed in a ratio of 50 mass%/50 mass% to form a mixture. 4.5 mass parts of a hydrolysis-preventing agent (bis(dipropylphenyl)carbodiimide) was added to 100 mass parts of the mixture and mixed. Then, the resultant mixture was formed into pellets by using a twin-screw extruder to prepare a so-called master batch. The master batch and polylactic acid based resin (1) were mixed in a ratio such that master batch:polylactic acid based resin (1) = 40 mass%: 60 mass% to prepare a resincomposition. Thereafter, the resin composition was extruded through a T-die of an extruder heated at 220°C and cooled to solidify to prepare a film.

The obtained film was drawn at 65°C biaxially in a draw ratio of 3 times in the MD and 3 times in the TD as shown in Table 1. Thereafter, the film was heat-treated at 140°C to obtain a monolayer reflecting film having a thickness of 188 μm. The obtained reflecting film was measured and evaluated for porosity and average reflectance. The results obtained are shown in Table 1.

[Table 1]

| | | Example 1 | Example 2 | Example 3 | Example 4 | Comparative Example 1 |
|---|---|---|---|---|---|---|
| Film layer construction | | A/B | A/B | A/B | A/B | Monolayer |
| Resin | Kind | Poly-lactic acid | Poly-lactic acid | Poly-lactic acid | Poly-lactic acid | Polylactic acid |
| | Refractive index | 1.45 | 1.45 | 1.45 | 1.45 | 1.45 |
| Filler for layer A | Kind | a | b | c | d | - |
| | Particle diameter (μm) | 0.16 | 0.4 | 0.15 | 0.7 | - |
| | Blending amount (%) | 20 | 20 | 20 | 20 | - |
| | Difference in refractive index | 1.07 | 0.55 | 0.15 | 0.19 | - |
| Filler for layer B | Kind | e | e | e | e | e |
| | Particle diameter (μm) | 0.25 | 0.25 | 0.25 | 0.25 | 0.25 |
| | Blending amount (%) | 20 | 20 | 20 | 20 | 20 |
| | Difference in refractive index | 1.25 | 1.25 | 1.25 | 1.25 | 1.25 |
| Film thickness | Total thickness (μm) | 188 | 188 | 188 | 188 | 188 |
| | Thickness of layer A (μm) | 48 | 48 | 48 | 48 | |

(continued)

|  |  |  | Example 1 | Example 2 | Example 3 | Example 4 | Comparative Example 1 |
|---|---|---|---|---|---|---|---|
| Draw ratio (time) |  | MD | 3 | 3 | 3 | 3 | 3 |
|  |  | TD | 3 | 3 | 3 | 3 | 3 |
| Evaluation | Porosity (%) |  | 23 | 28 | 25 | 30 | 20 |
|  | Average reflectance I |  | 99 | 94 | 98 | 96 | 84 |
|  | Average reflectance II |  | 99 | 98 | 98 | 98 | 99 |

a: Anatase type titanium oxide
b: Zinc oxide
c: Calcium carbonate
d: Barium sulfate
e: Rutile type titanium oxide
Average reflectance I: An average of reflectances in the range of 400 nm to 420 nm;
Average reflectance II: An average of reflectances in the range of 420 nm to 700 nm.

Table 1 indicates that the reflecting film of Examples 1 to 4 according to the present invention exhibited high reflectance over respective wavelength regions of 400 nm to 420 nm, and 420 nm to 700 nm.
On the other hand, it revealed that the film of Comparative Example 1 having a monolayer construction made of a resin composition containing rutile type titanium oxide as fine powder filler had poor reflecting performance especially in the wavelength region of 400nm to 420nm.

A reference reflecting film was prepared in the same manner as in Example 1 except the following: the resin compositions for layers A and B were prepared from polyethylene terephthalate (PET) in place of polylactic acid based resin (1); the heating temperature of the extruders in which the resin compositions for layers A and B were charged, respectively, was changed from 220°C to 280°C; the drawing temperature of the film was changed from 65°C to 130°C; and the temperature of heat treatment was changed from 140°C to 230°C. The obtained reference reflecting film was subjected to an ultraviolet ray irradiation test. That is, the obtained reflecting film was irradiated with ultraviolet rays for 1,000 hours in a UV fade-o-meter tester. Each of the reference reflecting film and the reflecting film of Example 1 was measured for reflectance before and after the irradiation with ultraviolet rays according to the above-mentioned measurement method (4)of average reflectance, and a difference ($\Delta R$) in reflectance before and after the irradiation is calculated. In a wavelength 420 nm, the reflecting film of Example 1 exhibited $\Delta R=3\%$, while the reference reflecting film including PET exhibited $\Delta R=32\%$. Further, for an average reflectance $\Delta R$ over a wavelength range of 400 nm to 700 nm, the reflecting film of Example 1 exhibited $\Delta R=2\%$, while the reference reflecting film exhibited $\Delta R=12\%$. That is, it revealed that the reflecting film that included polylactic acid based resin as the resin for forming the layers A and B showed a less decrease in average reflectance even after it was irradiated with ultraviolet rays. Note that the reflectance of polyethylene terephthalate used as the resin component was obtained according to the method A of JIS-K-7142 after it was formed into a film.

INDUSTRIAL APPLICABILITY

The reflecting films of the present invention according to claim 1 can be used as reflecting plates in various liquid crystal displays for mobile phones and personal computers, members of planar light sources, projection screens and so on.

**Claims**

1.    A reflecting film comprising a layer A and a layer B, the layer A is positioned outermost on the side of a surface used for reflection where hight enters, wherein the layers A and B are comprised of independently formed resin compositions containing a thermoplastic resin, wherein the layer B contains titanium oxide **characterised in that**, each of the layers A and B have voids, and the titanium oxide is of the rutile type having a vanadium content of 5 ppm or less, and wherein the layer A contains fine powder filler other than rutile type titanium oxide, and wherein the thermoplastic resin is an aliphatic polyester.

**2.** The reflecting film according to claim 1, wherein the reflecting film has a two-layer construction including the layer A and the layer B, or a three-layer construction including the layer A, the layer B, and the layer A in this order.

**3.** The reflecting film according to claim 1 or 2, wherein the aliphatic polyester is a polylactic acid based resin.

**4.** A reflecting plate for a liquid crystal display device, wherein the reflecting plate for a liquid crystal display device comprises the reflecting film according to any one of claims 1 to 3.


**Patentansprüche**

**1.** Reflektierende Folie, umfassend eine Schicht A und eine Schicht B, wobei die Schicht A am weitesten außen auf der Seite einer Oberfläche, die zur Reflektion verwendet wird, wo Licht eintritt, positioniert ist, wobei die Schichten A und B aus unabhängig gebildeten Harzzusammensetzungen bestehen, die ein thermoplastisches Harz enthalten, wobei die Schicht B ein Titanoxid enthält, **dadurch gekennzeichnet, dass** jede der Schichten Poren aufweist und das Titanoxid vom Rutiltyp ist, mit einem Vanadiumgehalt von 5 ppm oder weniger, und wobei die Schicht A Feinpulverfüllstoff außer dem Titanoxid vom Rutiltyp enthält und wobei das thermoplastische Harz ein aliphatischer Polyester ist.

**2.** Reflektierende Folie gemäß Anspruch 1, wobei die reflektierende Folie einen Zweischichtaufbau, einschließlich der Schicht A und der Schicht B, oder einen Dreischichtaufbau, einschließlich der Schicht A, der Schicht B und der Schicht A in dieser Reihenfolge, aufweist.

**3.** Reflektierende Folie gemäß Anspruch 1 oder 2, wobei der aliphatische Polyester ein Harz auf Polymilchsäurebasis ist.

**4.** Reflektierende Platte für eine Flüssigkristallanzeigevorrichtung, wobei die reflektierende Platte für eine Flüssigkristallanzeigevorrichtung die reflektierende Folie gemäß einem der Ansprüche 1 bis 3 umfasst.


**Revendications**

**1.** Film réfléchissant, comprenant une couche A et une couche B, la couche A étant positionnée tout à fait à l'extérieur du côté d'une surface utilisée pour la réflexion où entre la lumière, dans lequel les couches A et B se composent de compositions résineuses formées indépendamment, contenant une résine thermoplastique, dans lequel la couche B contient un oxyde de titane,
**caractérisé en ce que**
chacune des couches A et B présente des cavités, et l'oxyde de titane est du type rutile ayant une teneur en vanadium de 5 ppm ou moins, et dans lequel la couche A contient une charge en poudre fine autre que l'oxyde de titane de type rutile, et dans lequel la résine thermoplastique est un polyester aliphatique.

**2.** Film réfléchissant selon la revendication 1, dans lequel le film réfléchissant présente une construction en deux couches, comprenant la couche A et la couche B, ou une construction en trois couches comprenant la couche A, la couche B et la couche A, dans cet ordre.

**3.** Film réfléchissant selon la revendication 1 ou 2, dans lequel le polyester aliphatique est une résine à base d'acide polylactique.

**4.** Dalle réfléchissante pour un dispositif d'affichage à cristaux liquides, dans lequel la dalle réfléchissante pour le dispositif d'affichage à cristaux liquides comprend le film réfléchissant selon l'une quelconque des revendications 1 à 3.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2004015047 W
- WO 2005045482 A
- JP 2003357480 A

- JP H816175 B
- JP H11174213 B
- EP 0724181 A2